(19) Europäisches Patentamt / European Patent Office / Office européen des brevets

(11) **EP 4 676 033 A1**

(12) **EUROPEAN PATENT APPLICATION**

(43) Date of publication:
**07.01.2026 Bulletin 2026/02**

(21) Application number: **24306085.2**

(22) Date of filing: **02.07.2024**

(51) International Patent Classification (IPC):
*H04N 19/105* (2014.01)    *H04N 19/11* (2014.01)
*H04N 19/176* (2014.01)    *H04N 19/593* (2014.01)

(52) Cooperative Patent Classification (CPC):
**H04N 19/105; H04N 19/11; H04N 19/176;
H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **NASER, Karam
  35250 MOUAZE (FR)**
• **FRANCOIS, Edouard
  35890 BOURG DES COMPTES (FR)**
• **REUZE, Kevin
  35700 RENNES (FR)**
• **DUMAS, Thierry
  35700 RENNES (FR)**

(74) Representative: **Interdigital
Immeuble ZEN 2
845 A, avenue des Champs Blancs
35510 Cesson-Sévigné (FR)**

(54) **METHOD AND APPARATUS FOR ENCODING/DECODING WITH AN INTERPOLATED MATRIX BASED INTRA PREDICTION MODE**

(57)    In various implementations, method and devices are disclosed that encode or decode a block of a picture with an interpolated matrix based intra prediction mode. For instance, the method comprises determining that a block is coded using a regular intra prediction mode, a regular intra prediction mode being an angular directional mode; responsive to determining that the regular intra prediction mode used to code the block belongs to a list of intra prediction mode candidates comprising at least two matrix-based intra prediction modes, obtaining a predicted block from an interpolation of a first intra matrix based intra prediction mode and of a second matrix based intra prediction mode.

FIG. 6

**Description**

TECHNICAL FIELD

The present embodiments generally relate to a method and an apparatus for video encoding or decoding with an interpolated matrix based intra prediction mode.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In various implementations, methods and devices are disclosed that that encode or decode a block of a picture with a regular intra prediction mode that is replaced by an interpolation of a first intra matrix based intra prediction mode and of a second matrix based intra prediction mode.

According to a first aspect, a method of video decoding is disclosed that comprises determining that a block is coded using a regular intra prediction mode, a regular intra prediction mode being an angular directional mode; responsive to determining that the regular intra prediction mode used to code the current block belongs to a list of intra prediction mode candidates comprising at least two matrix based intra prediction modes, obtaining a predicted block from an interpolation of a first intra matrix based intra prediction mode and of a second matrix based intra prediction mode; and decoding the block based the predicted block.

According to a second aspect, a method of video encoding is disclosed that comprises determining that a block is coded using a regular intra prediction mode, a regular intra prediction mode being an angular directional mode; responsive to determining that the regular intra prediction mode used to code the current block belongs to a list of intra prediction mode candidates comprising at least two matrix based intra prediction modes, obtaining a predicted block from an interpolation of a first intra matrix based intra prediction mode and of a second matrix based intra prediction mode; and encoding the block based the predicted block.

According to a particular feature, an interpolation of a first intra matrix based intra prediction mode and of a second matrix based intra prediction mode comprises performing a weighted sum of a first prediction based on the first intra matrix based intra prediction mode and of a second prediction based of the second matrix based intra prediction mode.

According to another feature, an interpolation of a first intra matrix based intra prediction mode and of a second matrix based intra prediction mode comprises performing a weighted sum of a first matrix used by the first intra matrix based intra prediction mode and of a second matrix used by the second matrix based intra prediction mode.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates an example of a block and neighboring reference template considered for MIP2.

FIG. 5A and FIG. 5B illustrate different examples of distance between successive MIP2 modes in a set of intra modes.

FIG. 6 and FIG. 7 illustrate a method for video encoding or video decoding with an interpolated matrix based intra prediction mode according to various embodiments.

DETAILED DESCRIPTION

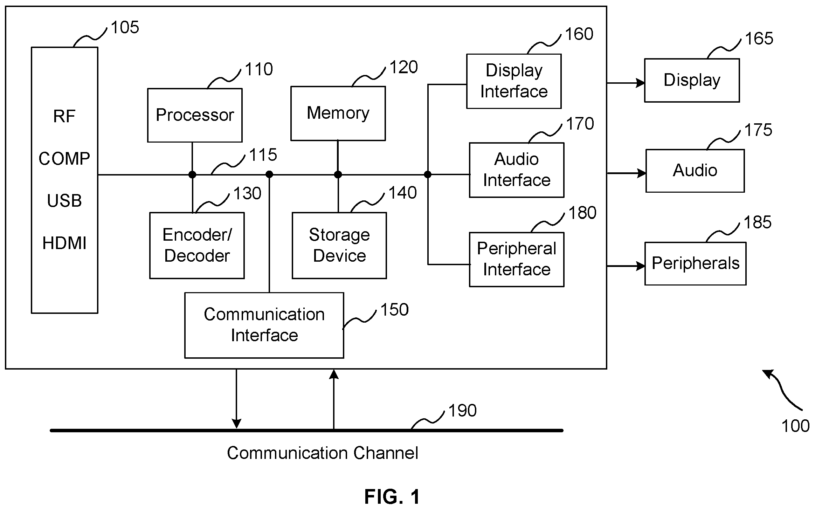

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or WC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

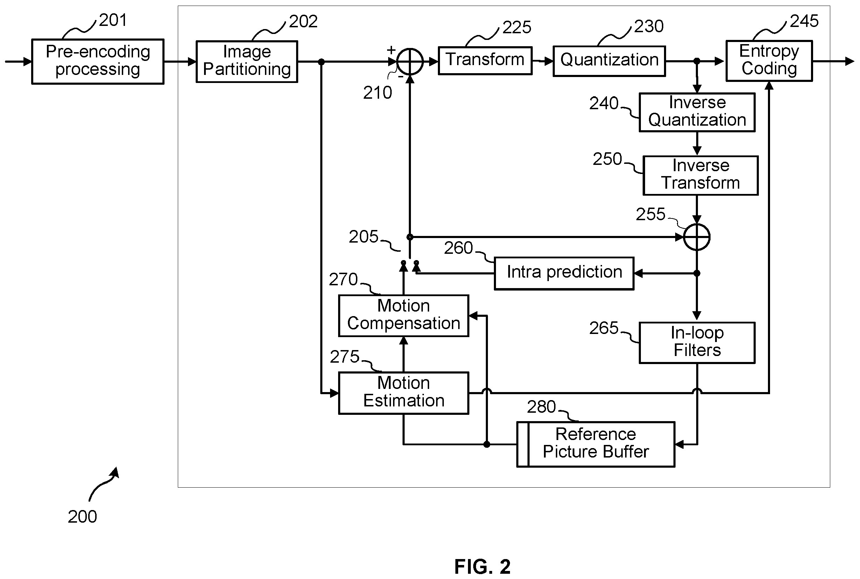

FIG. 2 illustrates an example video encoder 200, such as a WC (Versatile Video Coding) encoder. FIG. 2 may also illustrate an encoder in which improvements are made to the WC standard or an encoder employing technologies similar to WC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) or linear (ex: Wiener adaptive linear filter, ALF) filtering to reduce encoding artifacts. The filtered image is stored at a reference picture buffer (280).

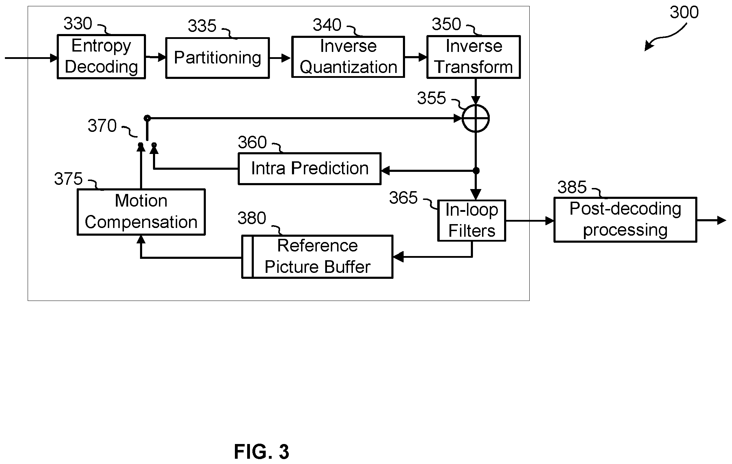

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing WC (Versatile Video Coding) standard. The current development of ECM includes various refinements for Intra Prediction that are detailed in the following.

Feature(s) associated with various Intra prediction modes are provided herein.

To capture the arbitrary edge directions presented in natural video, ECM features 65 directional intra prediction modes as in WC. The PLANAR and DC modes are well adapted for predicting blocks with smoothly varying textures.

When DIMD (Decoder Side Intra Mode Derivation) is applied, up to five intra modes are derived from the gradients in a template of reconstructed neighbor samples, and those five predictors are combined with the planar mode predictor with weights derived from the histogram of gradients.

When used, TIMD (Template-based Intra Mode Derivation) is applied the same way on the encoder side and the decoder side. For each intra prediction mode in the most probable mode MPM list of the current block, if needed, supplemented with default modes, it computes a prediction of the template of the block from the decoded reference samples of the template, and the SATD (Sum of Absolute Transformed Differences) between this prediction and the template of the block is calculated. The two intra prediction modes with the minimum SATDs are selected as the TIMD modes.

Intra template matching prediction (IntraTMP or ITMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector (BV).

To predict the samples of a block of width W and height H, Matrix weighted Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation.

Spatial geometric partitioning mode (SGPM) is an intra mode that resembles the inter coding tool of geometric partitioning mode (GPM), where the two prediction parts are generated from intra predicted process. In this mode, a candidate list is built with each entry containing one partition split and two intra prediction modes. The selected candidate index is signaled.

In the latest development of ECM, JVET-AH0209 introduces a new version of matrix intra prediction mode MIP2 implementing a matrix of weights (similar to MIP mode of ECMM/C). In MIP2, an intra prediction is obtained from a matrix product of a matrix of weights and the neighbor reference template where the matrix of weights is selected among a set of matrices based on template cost. As in TIMD, a SATD between the intra prediction and the template of the block is calculated, and the matrix of weights with the minimum SATDs is selected.

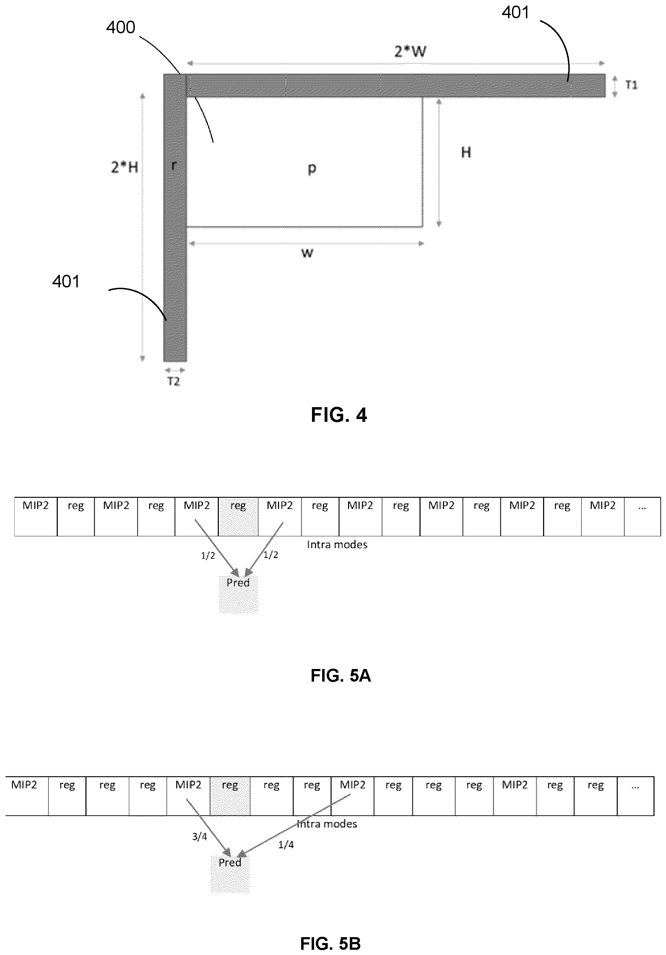

FIG. 4 illustrates an example of a block 400 and neighbor reference template considered for MIP2. MIP2 is defined for certain block dimensions and replaces some of the conventional intra modes. A matrix of weights is multiplied by the neighbor reference template 401 to derive the prediction samples of the block replacing a conventional intra prediction. The weights are applied to the reference samples of the L shaped causal neighborhood template 401 as shown in the FIG. 4.

The reference samples in the causal neighborhood are denoted as r, and F(x,y) is the matrix of weights. Then the prediction P(x,y) can be derived as:

$$P(x,y) = \sum_k F(x,y,k)*r(k),$$

where k denotes the index of the reference sample in the template.

For instance, this prediction may be used for block size with both width and height up to 32 (except for 4x32,32x4, 8x32 and 32x8). For instance, the template size (T1 and T2) is 2 for blocks with both width and height up to 16 and it is only used for mode 0 (DC), 1 (Planar), and directional modes of index 2+2*k. For other blocks (ie block larger than 16 in at least a dimension $32\times32$, $32\times16$, $16\times32$) template size is set to 1 and the mode is used for mode 0 (DC), 1 (Planar), and directional modes of index 2+4*k. The prediction is only performed for 16x16 positions, and the rest of the samples are generated by bilinear interpolation.

The newly adopted MIP2 mode is of limited usage as it replaces regular modes for certain block sizes and certain intra prediction modes Indeed, this limitation is due to the excessive amount of storage that would be required for saving all the matrices if all regular modes would be replaced by MIP2. This drawback is that this limitation may unfortunately restrict the usage of MIP2 and may not show the full potential of this mode.

It is desirable to better take the new MIP2 mode into consideration for any of the regular intra coding modes to improve the coding performance.

The present document proposes a method for encoding or decoding a video wherein an intra regular angular mode may be replaced by an interpolation of at least two adjacent MIP2 modes. For instance, for the cases where MIP2 is not used, an intermediate MIP2 mode may be generated by interpolating 2 adjacent MIP2 modes. Advantageously, all or some of the regular modes are replaced by an intermediate MIP2 mode, and therefore the method exhibits a good tradeoff for intra prediction between complexity and performance in the usage of MIP2. The present document therefore discloses a new prediction mode MIP_mix which is a mix of an interpolated MIP2 prediction and of the regular angular prediction.

Feature(s) associated with a generic embodiment for encoding or decoding with an interpolated matrix based intra prediction mode.

In an embodiment, a block is determined that is coded using a regular intra prediction mode, the regular intra prediction mode being an angular directional mode. Then, responsive to determining that the regular intra prediction mode used to code the current block belongs to a list of intra prediction mode candidates comprising at least two matrix-based intra prediction modes, obtaining a predicted block from an interpolation of a first intra matrix based intra prediction mode and of a second matrix based intra prediction mode; and encoding or decoding the block based the predicted block.

In a first embodiment, for the cases where MIP2 is not used, a new prediction mode MIP_mix is defined which consists in interpolating the prediction from 2 adjacent MIP2 modes by performing a weighted sum of respective predictions from these 2 modes.

In a second embodiment, for the cases where MIP2 is not used, a new prediction mode MIP_mix is defined which consists in obtaining a prediction using a mixed matrix derived from a weighted sum of the 2 matrices related to the 2 adjacent MIP2.

Feature(s) associated with interpolating MIP2 predictions are provided herein.

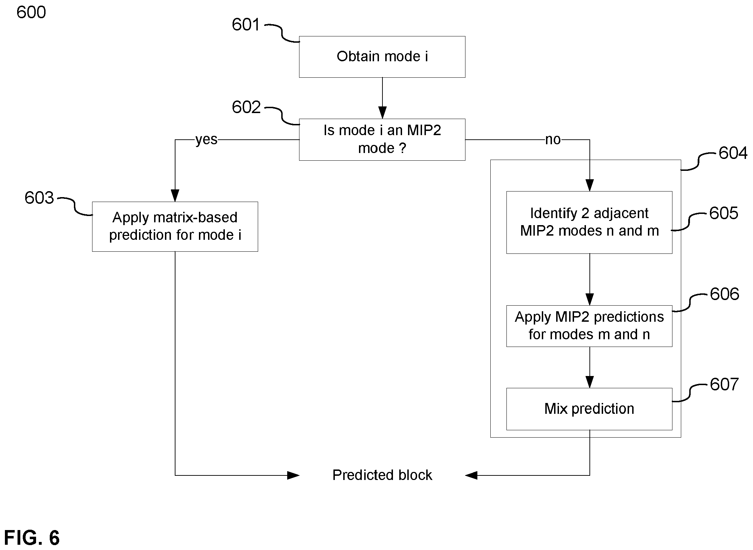

FIG. 6 illustrates a method for video encoding or video decoding with an interpolated matrix based intra prediction mode according to a first embodiment.

As discussed above, in ECM MIP2 mode may replace some of regular modes of certain dimensions. For instance, this prediction may used for block size with both width and height up to 32 (except for 4x32,32x4, 8x32 and 32x8) split into smaller block size with both width and height up to 16, and larger block size (32X32, 32x16, 16X32). Depending on the block size one out of two or one out of four angular modes may be replaced by a MIP2 mode.

According to a first embodiment, a new prediction mode MIP_mix is defined based on at least two adjacent MIP2 modes for the angular mode where MIP2 is not used. An interpolation process is used to generate intermediate MIP2 prediction from two (or more) MIP2 modes. For instance, in the case of interpolation of two MIP2 modes, if the angular mode is i, then the mode i is between two adjacent basic MIP2 modes, being $i+n$ and $i-m$. The value n and m being integer larger than 0. The two MIP2 prediction (P1 and P2) are generated by the mode indexed by $i+n$ and $i-m$. The final prediction may be generated as a weighted average of the two predictions:

$$P\_mix = (m \times P1 + n \times P2) / (n + m)$$

According to a variant, the weights $m/(n + m)$ and $n/(n + m)$ depend on the distance the current mode i and the next-by basic MIP2 modes $i + n$ and $i - m$. The closer the distance, the higher weight is used. The distance may be measured by the difference of indices between the respective mode. Thus, in the variant with 2 MIP2 modes, the weights may be selected as the distance of the other mode: m for P1 and n for P2.

In another variant, the weighted prediction is based on weights w1 and w2 that are defined among a pre-defined set of weights:

$$P\_mix = (w1 \times P1 + w2 \times P2) / (w1 + w2)$$

For example, (w1, w2) is taken among the set of weights {(1/4,3/4), (1/2,1/2), (3/4,1/4)}. For instance, the values $n/(n + m)$ and $m/(n + m)$ are rounded to fit one of the predefined set of weights.

FIG. 5A illustrates an example of distance between successive MIP2 modes in the set of intra modes. For instance, the variant of FIG. 5A illustrates the case where MIP2 modes replace mode 0 (DC), 1 (Planar) and directional modes of index 2+2*k for small blocks with both width and height up to 16. In the case of small blocks, MIP2 replaces every next regular mode. Therefore, the weights w1 and w2 may be constantly equal to half (1/2,1/2).

FIG. 5B illustrates another example of distance between successive MIP2 modes in the set of intra modes. For instance, the variant of FIG. 5B illustrates the case where MIP2 modes replace mode 0 (DC), 1 (Planar) and directional modes of index 2+4*k for large blocks with at least a dimension larger than 16. In the case of large blocks, MIP2 replaces one mode every four regular mode. Therefore, the weights w1 and w2 may be multiple of 1/4.

As shown on FIG.6, in step 601, a regular intra prediction mode (mode i) is obtained. For instance, at the decoding the mode may be obtained from the input bitstream. For instance, at the encoding the mode may be obtained from a RDO process applied to intra prediction and signaled in the bitstream for a decoder. In step 602, it is checked whether mode i is among the MIP2 modes or not. In other word, it is tested whether the regular intra prediction mode used to code the current block belongs to a list of intra prediction mode candidates comprising at least two matrix-based intra prediction modes as for instance shown on FIG. 5A and FIG. 5B (i.e. comply with rules, such as block size, for which regular intra mode are substitutable by MIP2 modes) and whether the regular intra prediction mode is one of the matrix based intra prediction modes. If mode i is one of the MIP2 modes, in 603, the matrix-based prediction is applied for MIP2 mode i. If mode i is an angular mode in between the MIP2 modes, in 604, an interpolation of adjacent MIP2 modes is processed replaced the mode i. According to the first embodiment, the interpolation 604 comprises identifying 605 a first intra matrix based intra prediction mode of index $i+n$ and a second matrix based intra prediction mode index $i-m$. The 2 MIP2 modes of index $i-m$ and $i+n$ may be adjacent to i. Then, in a step 606, two MIP2 predictions are generated for MIP2 modes of index $i-m$ and $i+n$. These two predictions are weighted in step 607 to generate the final predicted block. Then, in steps not shown on FIG. 6, the block is decoded or encoded using the predicted block.

Feature(s) associated with interpolating a matrix from two MIP2 matrices are provided herein.

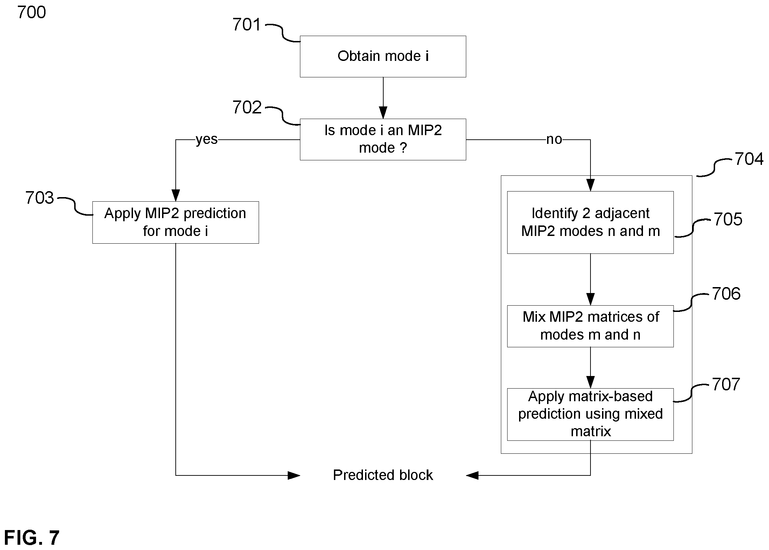

FIG. 7 illustrates a method for video encoding or video decoding with an interpolated matrix based intra prediction mode according to a second embodiment. In the second embodiment, the matrices $M_n$ and $M_m$ of the 2 adjacent MIP2 modes $i-m$ and $i+n$ are mixed to generate a new MIP2 matrix M which is applied to generate the prediction. M is obtained as a weighted version of $M_n$ and $M_m$:

$$M = w1^* M_n + w2^* M_m$$

where w1 and w2 are weights depending on the values of i, n and m, as described in the previous embodiment. Advantageously, the second embodiment avoids generating two predictions, and therefore reduces the number of operations.

Similarly to FIG. 6, in step 701 of FIG. 7, a regular intra prediction mode (mode i) is obtained. In step 702, it is checked whether mode i is among the MIP2 modes or not. In other word, it is tested whether the regular intra prediction mode used to code the current block belongs to a list of intra prediction mode candidates comprising at least two matrix based intra prediction modes as for instance shown on FIG. 5A and FIG. 5B (i.e. comply with rules, such as block size, for which regular intra mode are substitutable by MIP2 modes) and whether the regular intra prediction mode is one of the matrix based intra prediction modes. If mode i is one of the MIP2 modes, in 703, the matrix-based prediction is applied for MIP2 mode i. If mode i is an angular mode in between the MIP2 modes, in 704, an interpolation of adjacent MIP2 modes is processed to replace the mode i. According to the second embodiment, the interpolation 604 comprises identifying 705 a first intra matrix based intra prediction mode of index *i+n* and a second matrix based intra prediction mode index *i-m.* The 2 MIP2 modes of index *i-m* and *i+n* may be adjacent to i. Then, in a step 706, the matrices of MIP2 modes of index *i-m* and *i+n* are weighted to generate a mix matrix. The mixed matrix is used to perform the matrix-based prediction in step 707 to generate the final predicted block. Then, in steps not shown on FIG. 7, the block is decoded or encoded using the predicted block.

Feature(s) associated with additional interpolating with the regular angular prediction are provided herein.

In a third embodiment, the interpolated prediction of the first embodiment or of the second embodiment is further refined with a prediction from the regular angular mode. For instance, the mixed prediction *P_mix* is additionally mixed with the regular prediction *P_regular* for angular mode I to generate the refined interpolated prediction *P_addmix:*

$$P\_addmix = wmip*P\_mix + wregular*P\_regular$$

Where *wmip* and *wregular* are the normalized weights assigned to the mix prediction *P_mix* and to the regular prediction *P_regular.* For example, *wmix*=0.5 and *wregular*=0.5 or *wmix=0.25* and *wregular=0.75.*

Feature(s) associated with flag to control usage of new MIP_mix versus regular mode are provided herein.

In a fourth embodiment, for the cases where MIP2 is not used, a flag (for example mip_mix_flag) may specified at block level (for example CU level) to indicate whether the regular prediction mode or the new mode MIP_mix is used. When the flag is false, regular intra prediction is performed. When the flag is true, the new mode PIM_mix is applied to the current block.

Feature(s) associated with encoding process are provided herein.

For any of the first, second or third embodiment, the encoding process may not differ by the introduction of the new intra mode MIP_mix. A simple process is to check all intra modes (check all regular modes of index i) for the current block and to select the mode leading to the lowest rate-distortion cost C(i).

$$C(i) = D(i) + λ.R(i)$$

where D(i) is the distortion resulting from using mode i (for example sum of square errors between the original samples of the block and the reconstructed samples of the block using mode i), R(i) is the coding cost in bits when mode i is used, A is a pre-defined parameter that controls the balance between the distortion and the coding cost.

For any of the fourth embodiment, when the new mode MIP_mix is in competition with the regular mode, the decision may also be based on a simple rate-distortion cost check. An early termination may be used by checking first the regular mode (which is considered as of lower complexity than the MIP_mix mode). If the regular mode leads to a prediction residual of low amplitude, the encoder may select the regular mode without checking the MIP_mix mode. Otherwise, both modes may be tested.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the intra prediction module (260) of a video encoder 200 as shown in FIG. 2 or the intra prediction module (360) of a video decoder 300 as shown in FIG. 3. Moreover, the present aspects are not limited to ECM and WC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types.

## Claims

1. A method for video decoding comprising:

   determining (601, 701) that a block is coded using a regular intra prediction mode, a regular intra prediction mode being an angular directional mode;
   responsive to determining that the regular intra prediction mode used to code the block belongs to a list of intra prediction mode candidates comprising at least two matrix-based intra prediction modes, obtaining (604, 704) a predicted block from an interpolation of a first intra matrix based intra prediction mode and of a second matrix based intra prediction mode; and
   decoding the block based the predicted block.

2. A method for video encoding, comprising:

   determining (601, 701) that a block is coded using a regular intra prediction mode, a regular intra prediction mode being an angular directional mode;
   responsive to determining that the regular intra prediction mode used to code the block belongs to a list of intra prediction mode candidates comprising at least two matrix-based intra prediction modes, obtaining (604, 704) a predicted block from an interpolation of a first intra matrix based intra prediction mode and of a second matrix based intra prediction mode; and
   encoding the block based the predicted block.

3. A device for video decoding comprising one or more processors, wherein the one or more processors are configured to:

   determine (601, 701) that a block is coded using a regular intra prediction mode, a regular intra prediction mode being an angular directional mode;
   responsive to determining that the regular intra prediction mode used to code the block belongs to a list of intra prediction mode candidates comprising at least two matrix-based intra prediction modes, obtain (604, 704) a predicted block from an interpolation of a first intra matrix based intra prediction mode and of a second matrix based intra prediction mode; and
   decode the block based the predicted block.

4. A device for video encoding comprising one or more processors, wherein the one or more processors are configured to:

   determine that a block is coded using a regular intra prediction mode, a regular intra prediction mode being an angular directional mode;
   responsive to determining that the regular intra prediction mode used to code the block belongs to a list of intra prediction mode candidates comprising at least two matrix-based intra prediction modes, obtain (604, 704) a predicted block from an interpolation of a first intra matrix based intra prediction mode and of a second matrix based intra prediction mode; and

encode the block based the predicted block.

5. The method of any of claims 1-2 or the device of any of claims 3 or 4, wherein a matrix-based intra prediction mode derives a predicted block by multiplying a matrix of weights by a neighboring reference template that replaces a regular intra prediction mode.

6. The method of any of claims 1-2, 5 or the device of any of claims 3-5, wherein the first intra matrix based intra prediction mode and the second matrix based intra prediction mode are matrix based intra prediction modes adjacent to the regular intra prediction mode.

7. The method of any of claims 1-2, 5-6 or the device of any of claims 3-6, wherein obtaining a predicted block from an interpolation of a first intra matrix based intra prediction mode and of a second matrix based intra prediction mode further comprises performing a weighted sum of a first prediction based on the first intra matrix based intra prediction mode and of a second prediction based of the second matrix based intra prediction mode.

8. The method of any of claims 1-2, 5-6 or the device of any of claims 3-6, wherein obtaining a predicted block from an interpolation of a first intra matrix based intra prediction mode and of a second matrix based intra prediction mode further comprises performing a weighted sum of a first matrix used by the first intra matrix based intra prediction mode and of a second matrix used by the second matrix based intra prediction mode.

9. The method of any of claims 7 or 8 or the device of any of claims 7 or 8, wherein weights of the weighted sum depend on a distance between the first intra matrix based intra prediction mode and of a second matrix based intra prediction mode.

10. The method of any of claims 7-9 or the device of any of claims 7-9, wherein weights of the weighted sum belong to a set of weights {(1/4,3/4), (1/2,1/2), (3/4,1/4)}.

11. The method of any of claims 7-9 or the device of any of claims 7-9, wherein weights of the weighted sum are equal and set to 1/2.

12. The method of any of claims 1-2, 5-11 or the device of any of claims 3-11, wherein obtaining a predicted block from an interpolation of a first intra matrix based intra prediction mode and of a second matrix based intra prediction mode further comprises refining the predicted block with a prediction from the regular intra prediction mode.

13. The method of any of claims 1-2, 5-12 or the device of any of claims 3-12, further comprising obtaining an indication enabling a substitution of the regular intra prediction mode of the block by an interpolation of a first intra matrix based intra prediction mode and of a second matrix based intra prediction mode.

**FIG. 1**

Pre-encoding processing 201

Image Partitioning 202

Transform 225

Quantization 230

Entropy Coding 245

Inverse Quantization 240

Inverse Transform 250

255

Intra prediction 260

In-loop Filters 265

Reference Picture Buffer 280

Motion Compensation 270

Motion Estimation 275

205

210

200

**FIG. 2**

FIG. 3

**FIG. 4**

**FIG. 5A**

**FIG. 5B**

EP 4 676 033 A1

600

601

Obtain mode i

602

Is mode i an MIP2
mode ?

yes

no

604

603

Apply matrix-based
prediction for mode i

Identify 2 adjacent
MIP2 modes n and m

605

Apply MIP2 predictions
for modes m and n

606

Mix prediction

607

Predicted block

**FIG. 6**

700

701 — Obtain mode i

702 — Is mode i an MIP2 mode ?

—yes—

703 — Apply MIP2 prediction for mode i

—no—

704

705 — Identify 2 adjacent MIP2 modes n and m

706 — Mix MIP2 matrices of modes m and n

707 — Apply matrix-based prediction using mixed matrix

Predicted block

**FIG. 7**

EP 4 676 033 A1

17

Europäisches
Patentamt

European
Patent Office

Office européen
des brevets

## EUROPEAN SEARCH REPORT

**Application Number**

EP 24 30 6085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | RAY (QUALCOMM) B ET AL: "EE2-2.13: Matrix based intra prediction replacing conventional intra modes", 34. JVET MEETING; 20240417 - 20240424; RENNES; (THE JOINT VIDEO EXPLORATION TEAM OF ISO/IEC JTC1/SC29/WG11 AND ITU-T SG.16), no. JVET-AH0209 ; m67303 17 April 2024 (2024-04-17), XP030317645, Retrieved from the Internet: URL:https://jvet-experts.org/doc_end_user/documents/34_Rennes/wg11/JVET-AH0209-v2.zip JVET-AH0209-v2/JVET-AH0209-v2.docx [retrieved on 2024-04-17] * the whole document * ----- | 1-13 | INV. H04N19/105 H04N19/11 H04N19/176 H04N19/593 |
| Y | SHIODERA T ET AL: "Bidirectional intra prediction", 31. VCEG MEETING; 79. MPEG MEETING; 15-01-2007 - 16-01-2007;MARRAKECH; (VIDEO CODING EXPERTS GROUP OF ITU-T SG.16), no. VCEG-AE14; VCEG-AE14, 14 January 2007 (2007-01-14), XP030003517, * the whole document * ----- -/-- | 1-13 | TECHNICAL FIELDS SEARCHED (IPC) H04N |

The present search report has been drawn up for all claims

| Place of search | Date of completion of the search | Examiner |
|---|---|---|
| Munich | 13 November 2024 | Lombardi, Giancarlo |

EPO FORM 1503 03.82 (P04C01)

page 1 of 3

Europäisches
Patentamt

European
Patent Office

Office européen
des brevets

## EUROPEAN SEARCH REPORT

**Application Number**

EP 24 30 6085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BLASI (NOKIA) S ET AL: "AHG12: Adaptive MRL Fusion", 33. JVET MEETING; 20240117 - 20240126; TELECONFERENCE; (THE JOINT VIDEO EXPLORATION TEAM OF ISO/IEC JTC1/SC29/WG11 AND ITU-T SG.16) , no. JVET-AG0075 10 January 2024 (2024-01-10), XP030313917, Retrieved from the Internet: URL:https://jvet-experts.org/doc_end_user/ documents/33_Teleconference/wg11/JVET-AG00 75-v1.zip JVET-AG0075-v1.docx [retrieved on 2024-01-10] * the whole document * | 1-13 | |
| A | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16) , no. JVET-AH2025 ; m68146 26 June 2024 (2024-06-26), XP030319932, Retrieved from the Internet: URL:https://jvet-experts.org/doc_end_user/ documents/34_Rennes/wg11/JVET-AH2025-v1.zi p JVET-AH2025-v1.docx [retrieved on 2024-06-26] * pages 30-31, paragraph 3.1.21; figure 27 * | 1-13 | **TECHNICAL FIELDS SEARCHED (IPC)** |

-----

-/--

| The present search report has been drawn up for all claims | | |
|---|---|---|
| Place of search | Date of completion of the search | Examiner |
| Munich | 13 November 2024 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 30 6085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOON (KAU) G ET AL: "Non-EE2: Intra prediction fusion with PMPM list", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0111 ; m60876 14 October 2022 (2022-10-14), XP030304598, Retrieved from the Internet: URL:https://jvet-experts.org/doc_end_user/ documents/28_Mainz/wg11/JVET-AB0111-v1.zip JVET-AB0111_v1.docx [retrieved on 2022-10-14] * the whole document * ----- | 1-13 | |

TECHNICAL FIELDS SEARCHED (IPC)

The present search report has been drawn up for all claims

| Place of search | Date of completion of the search | Examiner |
|---|---|---|
| Munich | 13 November 2024 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)